(19) Europäisches Patentamt
European Patent Office
Office européen des brevets

(11) Publication number: **0 008 449**
**B1**

(12) **EUROPEAN PATENT SPECIFICATION**

(45) Date of publication of patent specification: **30.03.83**

(51) Int. Cl.³: **B 01 D 53/34,** C 10 K 1/12, C 10 K 1/14, C 10 G 21/20

(21) Application number: **79103023.2**

(22) Date of filing: **18.08.79**

(54) **Process for removing COS from a gas or liquid stream.**

(30) Priority: **24.08.78 US 936675**

(43) Date of publication of application:
**05.03.80 Bulletin 80/5**

(45) Publication of the grant of the patent:
**30.03.83 Bulletin 83/13**

(84) Designated Contracting States:
**BE DE FR GB IT NL**

(56) References cited:
**BE - A - 660 875**
**DE - A - 1 925 593**
**DE - A - 2 551 717**
**FR - A - 1 113 674**

(73) Proprietor: **THE DOW CHEMICAL COMPANY**
**Dow Center 2030 Abbott Road Post Office Box 1967**
**Midland Michigan 48640 (US)**

(72) Inventor: **Correll, Glenn David**
**505 Hopewell Street Birdsboro**
**Berks, Pennsylvania (US)**
Inventor: **Friedli, Hans Ruedi**
**302 Linden Lane Lake Jackson**
**Brazoria Texas (US)**

(74) Representative: **Hann, Michael, Dr.**
**Marburger Strasse 38**
**D-6300 Giessen (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for removing COS from a gas or liquid stream

This invention relates to a process for removing COS from a gas or a liquid stream by hydrolyzing the carbon oxysulfide, and more particularly to a method whereby the hydrolysis is catalyzed by morpholines.

Carbon oxysulfide or carbonyl sulfide (COS) is often present in minor amounts in petroleum refinery gases and it is found in larger amounts in coal gasification product streams. This toxic contaminant poses a special problem in sour gas purification processes since it is neither readily separated from nor easily hydrolyzed by known gas treating solvents under ordinary conditions. It is an undesirable contaminant in a Claus plant feed stream, since it is not readily converted to sulfur, and it is necessary to remove it from fuel gases and other gases for reasons of corrosion and air pollution. Carbon oxysulfide reacts irreversibly with ethanolamines but this is not usually a practical method for removing it from a gas stream because the solvent cannot be regenerated. The use of sulfolane, diisopropanolamine, methyldiethanolamine, and mixtures thereof are known to be useful to hydrolyze COS, but the present invention gives a high percent hydrolysis.

US—A—4 100 256 describes a process for COS hydrolysis using an aqueous solution of piperazinone compounds. However the present invention is more effective in that a higher rate of hydrolysis is obtained. Also, US—A—3 966 875 is directed to the removal of COS from a gas stream by employing N-methyl pyrrolidinone as the catalyst. However, this process is confined to the removal of COS, where the COS is present in the gas stream in a concentration of not more than 100—150 ppm.

FR—A—1 113 674 refers to a process for the separation of carbon oxysulfide from gases or liquids by washing or extracting the gas or the liquid with an aliphatic or cycloaliphatic, in particular an oxyalcoylamine, such as monoethanolamine. During or after this treatment the mixture is heated to a temperature of at least 100°C in order to remove the hydrogen sulfide gas. The list of suitable amines includes morpholine. It is stated that in this process preferably pure amines or amines of a purity of at least 80 percent and preferably at least 90 percent should be employed.

While this process results in an efficient hydrolysis of carboxysulfide it does not lend itself for a commercial use since due to the small amount of water which is present in such systems the amine salts of $H_2S$ and $CO_2$ precipitate and plug the equipment.

It has now been found that COS is rapidly and efficiently hydrolyzed to $H_2S$ and $CO_2$ from a gas or liquid stream by contacting said stream with an aqueous solution of one or more of a morpholine compound having the formula

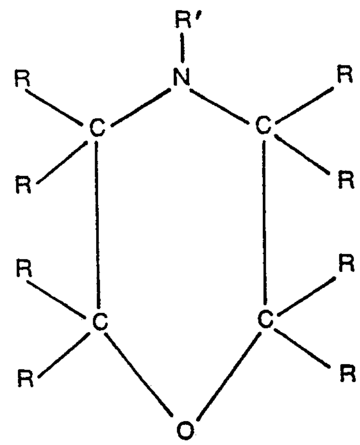

wherein each R is independently a hydrogen atom or an alkyl group of 1—2 carbon atoms and R' is a hydrogen atom and by removing the $H_2S$ and $CO_2$ formed by hydrolysis of COS from the aqueous solution merely by heating it to a temperature of 85°C or above, this process being characterized in that the aqueous solution comprises 25 to 75 percent by weight of the morpholine compound.

The hydrolysis can be carried out effectively using a morpholine compound or mixture thereof in a solution containing only a molar equivalent quantity of water based on the COS present. The process temperature can range from about 50°C to about 90°C with the preferred range being 80°C—90°C. The process of this invention is useful for removing and hydrolyzing COS in gas streams such as natural gases, synthetic gases, refinery gases and cracked gases. The invention is also applicable to liquid hydrocarbon streams containing COS.

The process of this invention is particularly useful for treating gas streams containing COS, $H_2S$, and $CO_2$.

The morpholine compounds useful in this invention comprise morpholine per se and its alkylated derivatives which are water-soluble.

Examples of useful morpholines are morpholine, 3,3-dimethylmorpholine, 2,6-dimethylmorpholine, 2,3,6-triethylmorpholine, 2-ethylmorpholine and 2,3,5,6-tetramethylmorpholine.

These morpholines are hygroscopic and, since most gas streams of the kind treated by this process normally contain more or less water vapor, in practice there is almost always some water present as the process continues even when the morpholine compound solution is initially essentially anhydrous.

The morpholine compound solution can also include a substantial proportion of one or more known gas-treating solvents; for example, an alkanolamine or sulfolane. Lower alkanolamines such as ethanolamine, diethanolamine, N-methyldiethanolamine, triethanolamine, isopropanolamine, and diisopropanolamine are common examples of that class. Such an additional solvent can comprise up to about 50 percent by weight of the solution although preferably it is limited to about 30 percent of the total. The hydrolysis of COS in the presence of the morpholine compounds is apparently a catalytic effect and this effect is facilitated by the increased solubility of COS in the solution provided by an additional solvent such as sulfolane or an alkanolamine. The range of the morpholine compound in the aqueous solution is 25—75 percent by weight with 40—60 percent by weight being the preferred range.

The hydrolysis process can be run at any convenient pressure and atmospheric or superatmospheric pressure is preferred. Contact time can vary widely from a few seconds to a few minutes, i.e., five minutes or more depending upon the temperature, concentration and composition of the aqueous N-heterocyclic solution, and the amount of COS present in the gas being treated.

The desorption of $H_2S$ and $CO_2$ formed by hydrolysis or from the gas stream absorbed is accomplished by merely heating the aqueous morpholine medium to a temperature of about 85°C or above, preferably to 100°C—150°C. Moderately reduced pressure will accelerate the desorption to some extent although this is usually not necessary.

Examples 1—5

The apparatus used in these examples utilized a 20-tray 1 inch (2.54 cm) diameter column as the gas-liquid contactor. A liquid solution was continuously pumped to the top of the column in a closed type circuit. Natural gas was introduced at the bottom of the column and vented. The liquid was preheated before entering the column. The liquid reservoir contained about 3000 gms total. The natural gas was modified by adding $CO_2$, $H_2S$, and COS in the amounts set forth below.

The following data of Table I were obtained using a 50 weight percent aqueous solution of morpholine.

Examples 6 and 7

Following the procedure set forth in Examples 1—5, the data of Table II were obtained using a 25 weight percent aqueous solution of morpholine.

TABLE I—50% morpholine

| Example No. | Lq. rate cc/min | Lq. temp. °C | Gas rate l/min | Mole % in $CO_2$ | Mole % in $H_2S$ | Mole % in COS | Mole % out COS | Hydrolysis % |
|---|---|---|---|---|---|---|---|---|
| 1 | 18 | 75 | 1.0 | 6.9618 | 9.5888 | 0.1191 | 0.0029 | 97.6 |
| 2 | 18 | 75 | 2.0 | 7.9729 | 7.3969 | 0.1101 | 0.0000 | 100.0 |
| 3 | 10 | 70 | 2.0 | 12.4502 | 1.0906 | 0.0587 | 0.0071 | 87.9 |
| 4 | 5 | 70 | 2.0 | 11.4585 | 1.2252 | 0.0844 | 0.0106 | 87.4 |
| 5 | 10 | 70 | 2.0 | 11.7270 | 0.8692 | 0.1152 | 0.0110 | 90.4 |

TABLE II—25% morpholine

| Example No. | Lq. rate cc/min | Lq. temp. °C | Gas rate l/min | Mole % in $CO_2$ | Mole % in $H_2S$ | Mole % in COS | Mole % out COS | Hydrolysis % |
|---|---|---|---|---|---|---|---|---|
| 6 | 10 | 70 | 2.2 | 9.3980 | 0.0000 | 0.1228 | 0.0224 | 81.8 |
| 7 | 10 | 70 | 2.2 | 9.1092 | 0.0000 | 0.1261 | 0.0622 | 50.7 |

Control A

Following the above procedure the data in Table III were obtained using a 90 weight percent aqueous solution of morpholine.

The above system worked well for hydrolysis, but the entire apparatus quickly plugged up with morpholine salts of $CO_2$ and $H_2S$ which could not be held in solution because of the small amount of water present.

Examples 8—35

The apparatus used in these examples utilized an 8′ (2.44 m) tower, 3″ (7.62 cm) in diameter packed with 3/8″ (0.95 cm) ceramic saddles. Natural gas was introduced at the bottom. The liquid was preheated and introduced at the top of the column. All data collected were with 50 weight percent aqueous morpholine. The natural gas was modified with $CO_2$, $H_2S$ and COS as in Examples 1—5. The data in Table IV show temperature effects.

TABLE III—90% morpholine

| Example No. | Lq. rate cc/min | Lq. temp. °C | Gas rate l/min | Mole % in $CO_2$ | Mole % in $H_2S$ | Mole % in COS | Mole % out COS | Hydrolysis % |
|---|---|---|---|---|---|---|---|---|
| Control A | 10 | 25 | 2.0 | 9.4470 | 0.0000 | 0.1508 | 0.0004 | 99.7 |

TABLE IV—50% morpholine

| Example No. | Gas rate *SCFM ($m^3$) | Liq. rate **GPH (l/hr) | Mole % in $CO_2$ | Mole % in $H_2S$ | Mole % in COS | Mole % out COS | % Hydrolysis |
|---|---|---|---|---|---|---|---|
| | | | Hydrolysis at 60°C | | | | |
| 8 | 2.1 (0.060) | 7.68 (29.1) | 44.582 | 1.327 | 0.0500 | 0.0165 | 66.0 |
| 9 | 2.1 (0.060) | 7.68 (29.1) | 45.227 | 1.855 | 0.0270 | 0.0165 | 38.9 |
| 10 | 2.1 (0.060) | 7.68 (29.1) | 23.590 | 0.912 | 0.0090 | 0.0039 | 56.6 |
| | | | Hydrolysis at 70°C | | | | |
| 11 | 2.5 (0.071) | 8.04 (30.4) | 3.740 | 0.710 | 0.5971 | 0.0416 | 93.0 |
| 12 | 2.5 (0.071) | 8.04 (30.4) | 8.701 | 0.236 | 0.3690 | 0.0780 | 78.9 |
| 13 | 2.4 (0.068) | 7.02 (26.6) | 10.657 | 0.987 | 0.7050 | 0.1015 | 85.6 |
| 14 | 2.4 (0.068) | 7.08 (26.8) | 11.562 | 1.163 | 1.385 | 0.1500 | 89.2 |
| 15 | 2.4 (0.068) | 6.96 (26.4) | 17.486 | 1.251 | 0.687 | 0.1160 | 83.1 |
| | | | Hydrolysis at 80°C | | | | |
| 16 | 1.96 (0.056) | 7.08 (26.8) | 2.1110 | 0.584 | 0.1570 | 0.0175 | 88.8 |
| 17 | 1.96 (0.056) | 6.96 (26.4) | 2.7620 | 0.270 | 0.2660 | 0.0235 | 90.7 |
| 18 | 1.96 (0.056) | 7.08 (26.8) | 6.852 | 0.367 | 0.1990 | 0.0290 | 85.4 |
| 19 | 2.03 (0.058) | 6.96 (26.4) | 3.614 | 0.452 | 0.2390 | 0.0255 | 89.1 |
| 20 | 2.03 (0.058) | 7.08 (26.8) | 3.437 | 1.090 | 0.3890 | 0.0230 | 94.1 |
| 21 | 2.03 (0.058) | 7.08 (26.8) | 3.012 | 0.369 | 0.2280 | 0.0195 | 91.4 |
| 22 | 2.03 (0.058) | 7.08 (26.8) | 2.256 | 0.325 | 0.1920 | 0.0175 | 90.4 |
| 23 | 1.96 (0.056) | 7.08 (26.8) | 2.107 | 0.266 | 0.1960 | 0.0195 | 90.0 |
| 24 | 1.96 (0.056) | 7.20 (27.3) | 2.232 | 0.279 | 0.1870 | 0.0210 | 88.8 |
| 25 | 1.96 (0.056) | 6.84 (25.9) | 2.612 | 0.391 | 0.2210 | 0.0255 | 88.3 |
| | | | Hydrolysis at 90°C | | | | |
| 26 | 1.58 (0.045) | 7.08 (26.8) | 2.529 | 0.405 | 0.4590 | 0.0310 | 93.2 |
| 27 | 1.58 (0.045) | 7.08 (26.8) | 2.152 | 0.439 | 0.5160 | 0.0133 | 97.4 |
| 28 | 1.26 (0.036) | 6.96 (26.4) | 3.794 | 1.836 | 0.0190 | 0.0020 | 89.5 |
| 29 | 1.58 (0.045) | 6.96 (26.4) | 3.070 | 1.115 | 0.8110 | 0.0345 | 95.8 |
| 30 | 1.58 (0.045) | 6.96 (26.4) | 2.887 | 1.087 | 0.896 | 0.0305 | 96.6 |
| 31 | 1.58 (0.045) | 6.96 (26.4) | 2.560 | 1.070 | 0.704 | 0.0245 | 96.5 |
| 32 | 1.26 (0.036) | 7.08 (26.8) | 3.463 | 1.853 | 0.0140 | 0.0010 | 92.9 |
| 33 | 1.26 (0.036) | 7.08 (26.8) | 3.282 | 1.721 | 0.0110 | 0.0010 | 90.9 |
| 34 | 1.26 (0.036) | 7.14 (27.0) | 3.359 | 1.779 | 0.0100 | 0.0000 | 100.0 |
| 35 | 1.26 (0.036) | 7.14 (27.0) | 3.519 | 1.759 | 0.0100 | 0.0010 | 90.0 |

* Standard cubic feet per minute.
** U.S. gallons per hour.

Examples 36—42

Following the procedure set forth in Examples 19—46, a 50 weight percent aqueous morpholine solution was used at 90°C, a liquid rate of 11—12 U.S. gallons per hour (41.7—45.5 l/hr) to contact a modified natural gas stream flowing at 1.1 to 1.5 standard cubic feet per minute (0.031—0.042 $m^3$/min) to give a residence time of 54—67 seconds. The averages of several runs are set forth in Table VI.

TABLE V

| Example No. | Mole % COS in | Mole % COS out | Average % hydrolysis | Notes |
|---|---|---|---|---|
| 36 | 0.05—0.10 | 0.0042 | 94.76 | Av. of 9 runs |
| 37 | 0.10—0.15 | 0.0072 | 94.01 | Av. of 13 runs |
| 38 | 0.15—0.20 | 0.0113 | 93.03 | Av. of 10 runs |
| 39 | 0.20—0.25 | 0.0143 | 93.48 | Av. of 8 runs |
| 40 | 0.25—0.40 | 0.0206 | 93.72 | Av. of 4 runs |
| 41 | 0.40—0.75 | 0.0390 | 92.14 | Av. of 7 runs |
| 42 | 0.75—1.25 | 0.1240 | 87.90 | Single run |

Examples 43—47

Using the same hydrolysis temperature and solution as in Examples 47—53 with a gas rate of 1.0—1.3 SCFM (0.028—0.037 $m^3$/min), a liquid circulation rate of 25 U.S. gallons per hour (94.8 l/hr) and a gas residence time of 60—75 seconds, the run averages of Table VII were obtained.

TABLE VI

| Example No. | Mole % COS in | Mole % COS out | Average % hydrolysis | Notes |
|---|---|---|---|---|
| 43 | 0.05—0.10 | 0.0030 | 97.0 | Single run |
| 44 | 0.10—0.15 | 0.0065 | 95.6 | Av. of 2 runs |
| 45 | 0.15—0.20 | 0.0062 | 96.5 | Av. of 13 runs |
| 46 | 0.20—0.25 | 0.0097 | 96.1 | Av. of 9 runs |
| 47 | 0.25—0.35 | 0.0086 | 97.0 | Av. of 6 runs |

Examples 48—53

Using the equipment set forth in Examples 19—46, the tower was flooded almost to the top leaving a small air space. It was found that under these conditions, the flow rate could be reduced to 8 or 9 U.S. gallons per hour (30.4—34.1 l/hr) and the percent hydrolysis could be increased. In these examples, a 50 percent aqueous morpholine solution was used at a temperature of 90°C. The inlet gas flow rate was 1.5 SCFM (0.042 $m^3$/min) and the residence time was 50—53 seconds. The results are set forth in Table VIII.

TABLE VII

| Example No. | Mole % COS in | Mole % COS out | Average % hydrolysis | Notes |
|---|---|---|---|---|
| 48 | 0.05—0.10 | 0.0060 | 91.4 | Single run |
| 49 | 0.10—0.15 | 0.0043 | 96.9 | Av. of 5 runs |
| 50 | 0.15—0.20 | 0.0060 | 96.4 | Single run |
| 51 | 0.20—0.25 | 0.0044 | 98.1 | Av. of 3 runs |
| 52 | 0.25—0.35 | 0.0043 | 98.5 | Av. of 7 runs |
| 53 | 0.35—0.76 | 0.0033 | 99.3 | Av. of 5 runs |

While the examples illustrate the use of a single compound in aqueous solution, similar results are obtained when two or more of these compounds are used.

## Claims

1. A process for removing COS from a gas or liquid stream where the COS is hydrolyzed to $H_2S$ and $CO_2$ by contacting said stream with an aqueous solution of a morpholine compound having the formula

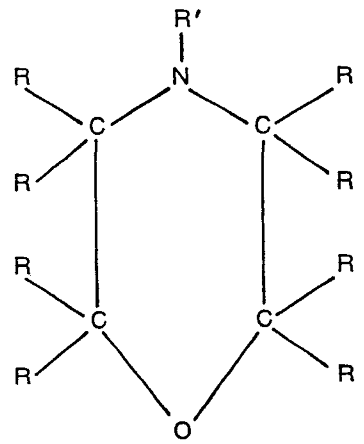

wherein each R is independently a hydrogen atom or an alkyl group of 1—2 carbon atoms, and R′ is a hydrogen atom and the $H_2S$ and $CO_2$ formed by hydrolysis of COS are removed from the aqueous solution merely by heating it to a temperature of 85°C or above, characterized in that the aqueous solution comprises 25 to 75 percent by weight of the morpholine compound.

2. The process of claim 1, characterized in that the aqueous solution also contains a known gas-treating solvent.

**Patentansprüche**

1. Verfahren zur Abtrennung von COS aus einem Gas- oder Flüssigkeitsstrom, wobei COS zu $H_2S$ und $CO_2$ hydrolysiert wird, indem dieser Strom mit einer wäßrigen Lösung einer Morpholinverbindung der Formel

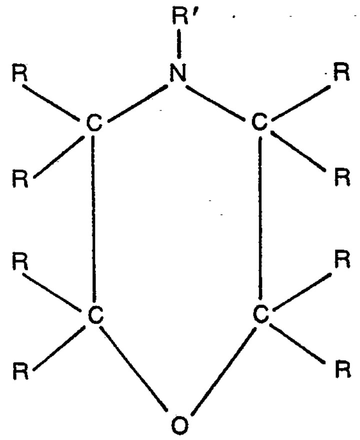

in der jedes R unabhängig ein Wasserstoffatom oder eine Alkylgruppe mit 1—2 Kohlenstoffatomen ist und R′ ein Wasserstoffatom ist, in Berührung gebracht wird und die durch Hydrolyse von COS gebildeten $H_2S$ und $CO_2$ aus der wäßrigen Lösung nur durch deren Erwärmung auf eine Temperatur von 85°C oder höher entfernt werden, dadurch gekennzeichnet, daß die wäßrige Lösung 25 bis 75 Gewichtsprozent der Morpholinverbindung enthält.

2. Verfahren nach Anspruch 1, dadurch gekennzeichnet, daß die wäßrige Lösung auch ein bekanntes Gasbehandlungslösungsmittel enthält.

**Revendications**

1. Procédé pour séparer le COS d'un courant de gaz ou de liquide où le COS est hydrolysé en $H_2S$ et $CO_2$ par mise en contact dudit courant avec une solution aqueuse d'un composé morpholine ayant la formule:

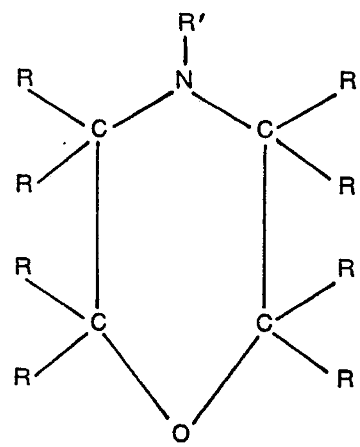

dans laquelle chaque R est indépendamment un atome d'hydrogène ou un groupe alkyle de 1—2 atomes de carbone, et R′ est un atome d'hydrogène, et l'$H_2S$ et le $CO_2$ formé par l'hydrolyse de COS sont séparés de la solution aqueuse simplement en la chauffant à une température de 85°C ou plus élevée, caractérisé par le fait que la solution aqueuse comprend 25 à 75% en poids du composé morpholine.

2. Procédé selon la revendication 1, caractérisé par la fait que la solution aqueuse contient également un solvant pour traitement des gaz connu.